# EUROPEAN PATENT SPECIFICATION

(11) **EP 0 930 940 B1**
(45) Date of publication and mention of the grant of the patent: **18.10.2000**
(21) Application number: 97936528.5
(22) Date of filing: 29.07.1997
(51) Int. Cl.: B01J 49/00, C02F 1/42

(54) **PROCESS FOR CONTROLLING THE REGENERATION OF A WATER TREATMENT DEVICE AND WATER TREATMENT DEVICE USING SAID PROCESS**
VERFAHREN ZUR STEUERUNG DER REGENERIERUNG EINES WASSERBEHANDLUNGSSYSTEMS UND DIESES VERFAHREN VERWENDENDES WASSERBEHANDLUNGSSYSTEM
PROCEDE PERMETTANT DE COMMANDER LA REGENERATION D'UN DISPOSITIF DE TRAITEMENT DE L'EAU ET DISPOSITIF DE TRAITEMENT DE L'EAU FAISANT APPEL A CE PROCEDE

(30) Priority: 29.07.1996 BE 9600667
(43) Date of publication of application: 28.07.1999
(73) Proprietor: Padema, Naamloze Vennootschap, 2050 Antwerpen (BE)
(72) Inventor: VAN DE MOORTELE, Guido, Ivo, Cesar, Maria, B-2050 Antwerpen (BE)
(74) Representative: Donné, Eddy
(86) International application number: BE9700090
(87) International publication number: WO9804350

(56) References cited:
- EP-A- 0 423 923
- WO-A-94/13379
- DE-A- 2 319 343
- US-A- 3 891 552
- US-A- 4 539 106
- US-A- 4 990 245

## Description

This invention concerns a process for controlling the regeneration of a water treatment device as well as a water treatment device which uses said process and which to this end comprises the controlling means necessary for it.

More particularly the invention concerns a water treatment device in which the water is guided through a treatment medium.

In the first place it concerns water softening devices in which water is guided through a cation exchange resin which assures that the calcium and magnesium salts are replaced by sodium salts. More generally the invention can also be used in other water treatment devices, for instance in filtering devices in which the treatment medium then consists of a filtering element.

In certain applications such treatment medium must be regularly regenerated.

In the case of a water softening device this is done by rinsing the resin with a regeneration agent such as brine. In filtering devices such regeneration may consist of backflushing with water, in which case eventually a cleaning agent or other accessory agent, for example a disinfectant may be added to said water.

In the case of a simple water treatment device this device must be put out of service during the regeneration.

In the case when continuous operation is required, for water softening devices it is known that the latter can be made up of two treatment units where one treatment unit is always out of service but held in readiness so that at the moment when the other treatment unit has to be regenerated, the treatment unit held in readiness comes into action and vice versa. Such a device is described in US 3 891 552.

A disadvantage of this technique is the fact that one treatment unit is always out of use, even when the treatment medium in it has been regenerated. Another disadvantage of this technique is the fact that when the capacity is increased, this must always be done by adding two treatment units, which causes the device to become very bulky.

The invention envisions a process for controlling the regeneration of a water treatment device in which the above named disadvantages can be excluded. At the same time the invention envisions control which is almost exclusively hydraulic, preferably totally hydraulic so that no connection to an external energy source is necessary.

For this purpose the invention envisions a process for controlling a water treatment device, specifically a water treatment device consisting of two or more treatment units and possibly regeneration means to regenerate said treatment units, characterized in that after a regeneration cycle is performed on a first of these treatment units, automatically as a result of the execution of the regeneration cycle on said first treatment unit, successively the regeneration cycles of the other treatment units is performed, whereby each time after the completion of each regeneration cycle the treatment unit involved is put back into service and the next is started by means of a hydraulic signal.

Due to the fact that by this process the regeneration cycles of the various treatment units are carried out systematically in succession and every treatment unit after the completion of the regeneration of its treatment medium is put back into service, on the one hand two treatment units are never simultaneously in regeneration, and on the other, an optimal number of water treatment units is always in service so that a maximal capacity can be obtained from a minimal quantity of treatment medium.

The invention also concerns a water treatment device with two or more treatment units which are coupled in such a way that the above mentioned method is repeated automatically whenever regeneration is required.

For the purpose of better illustrating the characteristics of the invention, in the following as a nonlimiting example a preferred embodiment of the invention is described in which, as an example, a water softening device is used, with reference to the appended drawings, in which:
figure 1 represents schematically a water softening device according to the invention;
figure 2 represents by a number of curves how the operating cycles and regeneration cycles of the treatment units of the water softening device in figure 1 take place in succession;
figure 3 represents in more detail the water softening device in figure 1;
figure 4 represents another representation of the part indicated by F4 in figure 3;
figure 5 represents a cross section along line V-V in figure 4;
figure 6 on a larger scale represents a bottom view of the control disk which is indicated by F6 in figure 5;
figure 7 on a larger scale represents a cross section along line VII-VII in figure 6 but in the assembled state;
figure 8 is yet another representation of the parts indicated by F4 in figure 3;
figures 9 through 11 represents schematically for various states the part illustrated by F9 in figure 5.

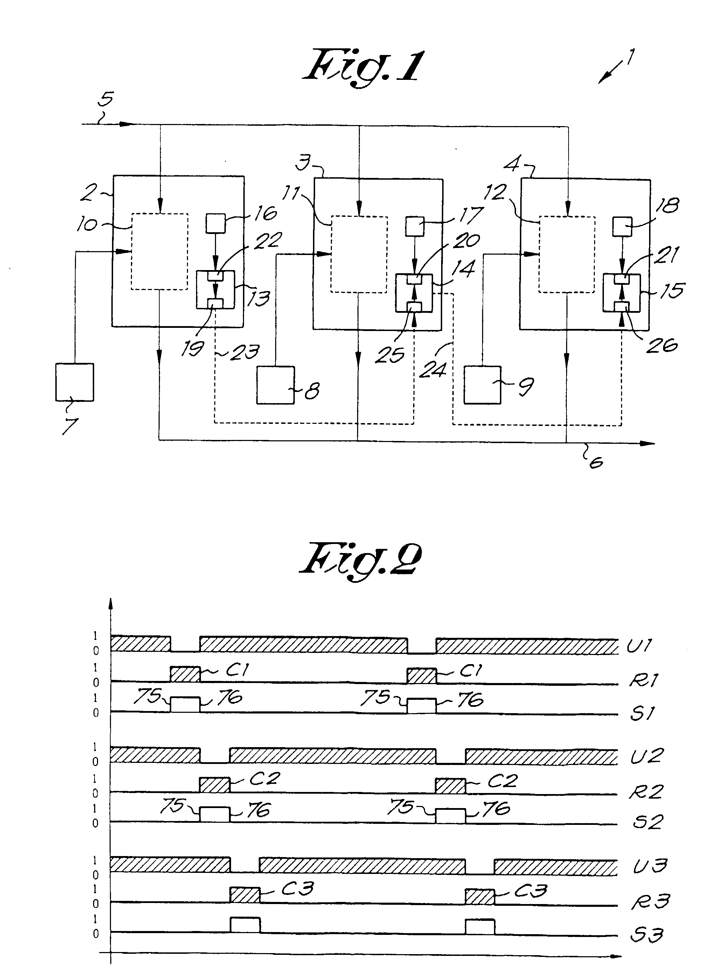

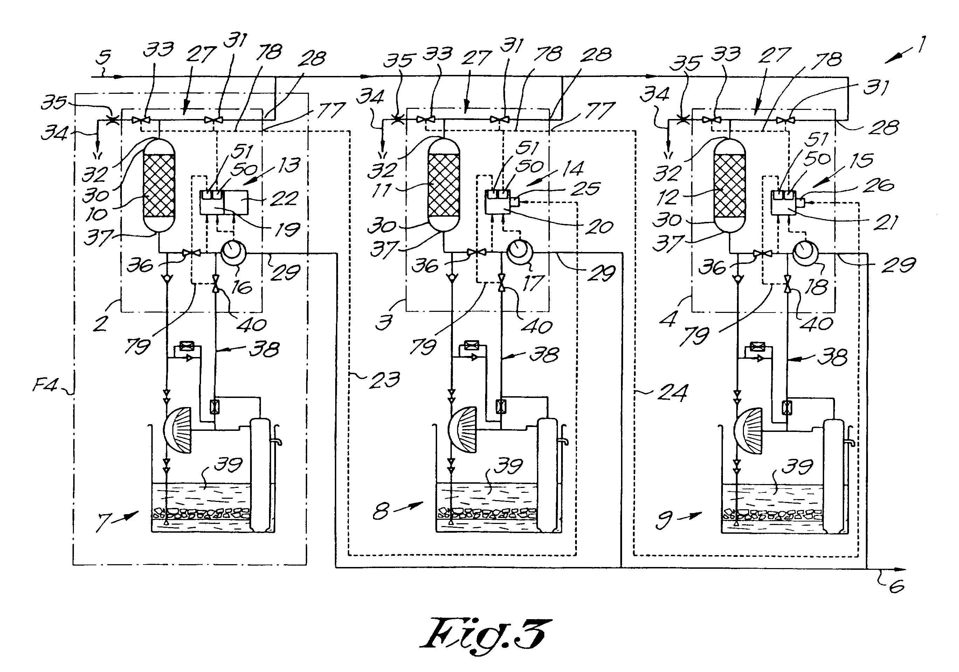

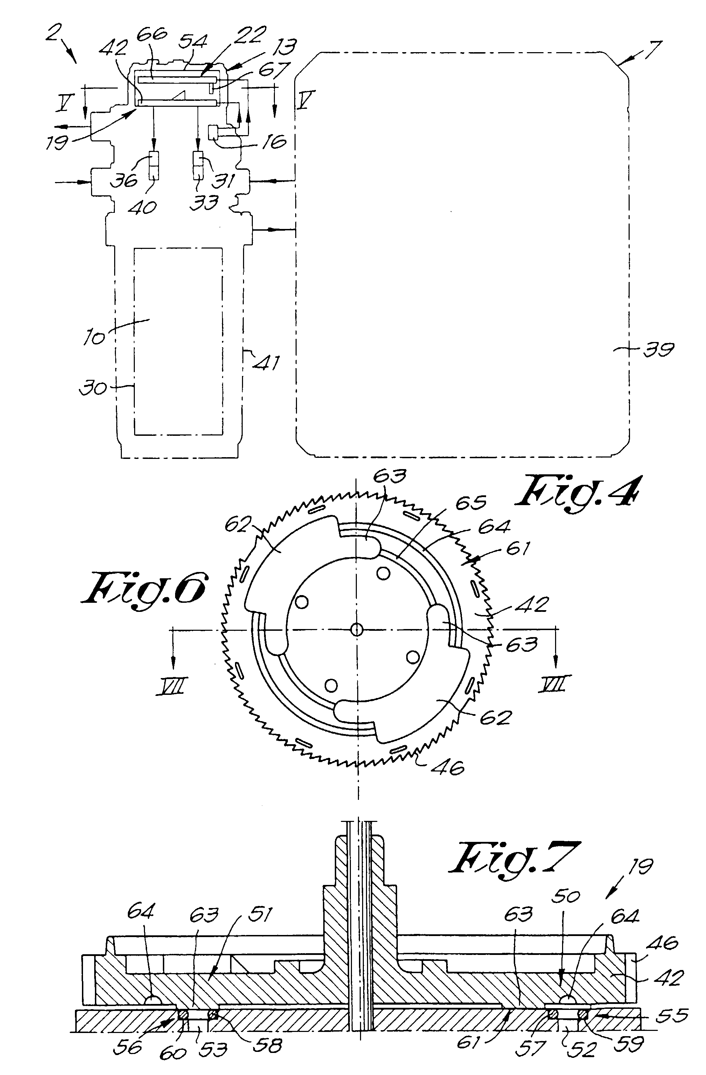

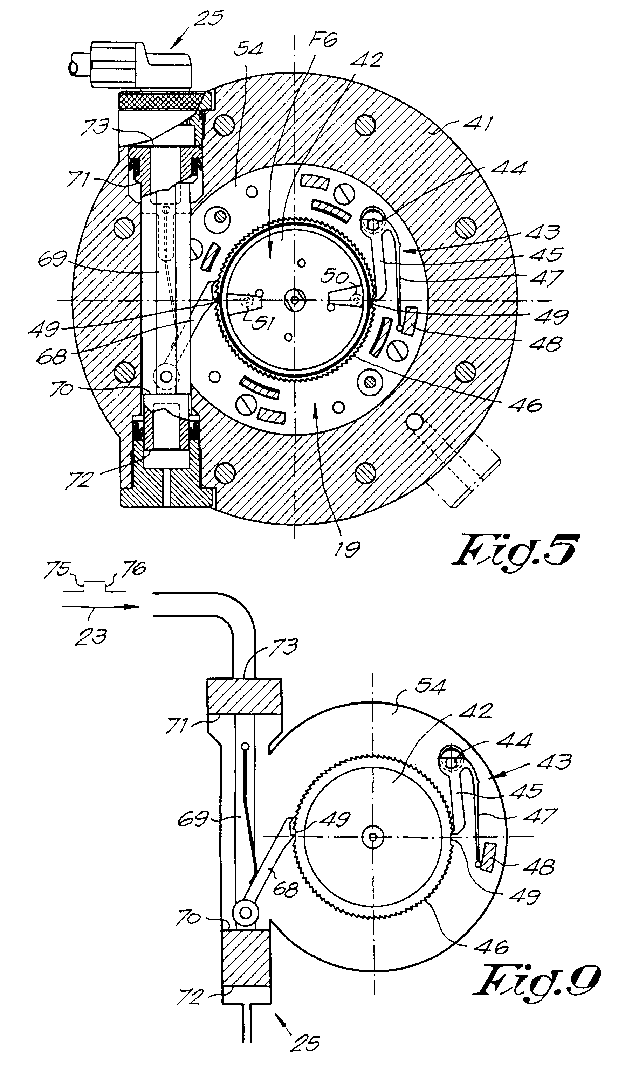

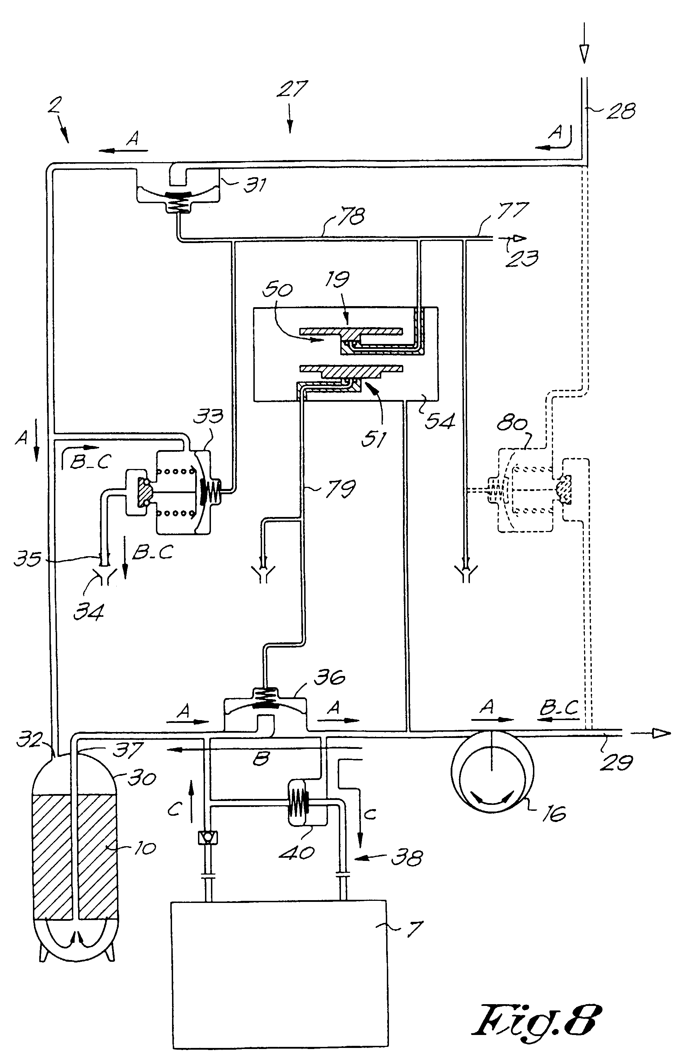

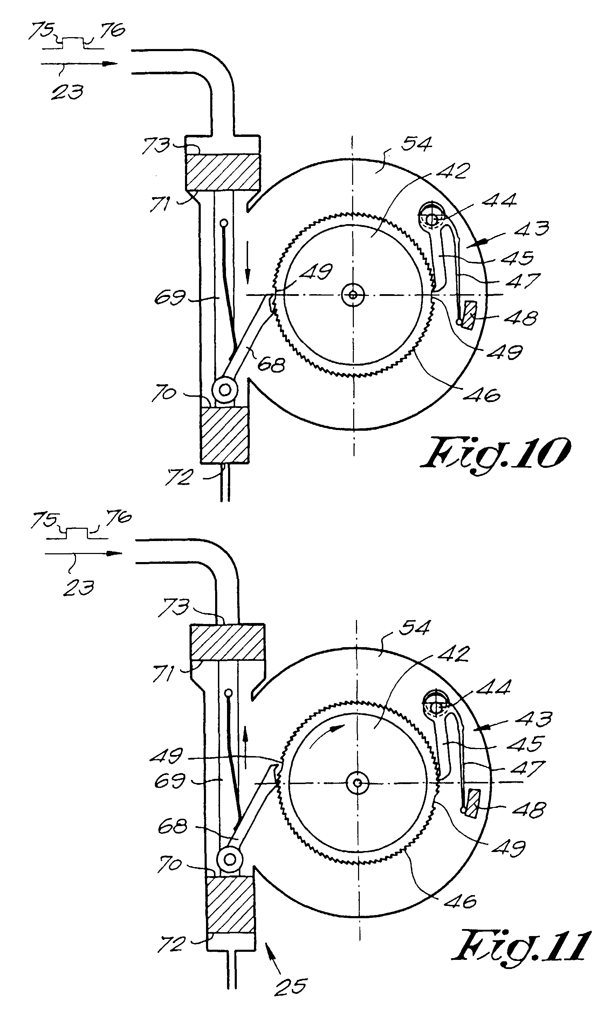

Figure 1 shows schematically a water softening device 1 according to the invention consisting of three treatment units 2-3-4 which are connected by a common feed 5 for water and can deliver to the user via a common outlet 6. The treatment units 2-3-4 are each provided with regeneration means 7-8-9 with which the treatment medium, which is indicated schematically by reference numbers 10-11 and 12, can be regenerated.

As shown schematically in figure 2 each treatment unit 2-3-4 has a service state, U1-U2-U3 respectively and a regeneration state, R1-R2-R3 respectively in which the corresponding treatment unit is out of service.

In the diagram of figure 2 this is shown by curves where the state "0" indicates that no treatment or no regeneration is in progress, while state "1" indicates that a treatment or regeneration is in progress.

As may be deduced from the diagram of figure 2 the process according to the invention provides in a control of the regeneration in such a way that after a regeneration cycle C1 has been performed on the first treatment unit 2, automatically as a result of execution of cycle C1 the subsequent regenerations are performed on the next treatment units 3-4 as indicated by cycles C2 and C3, whereby each time upon the termination of each regeneration cycle C1-C2-C3 the involved treatment unit 2-3-4 is returned to service.

The regeneration cycle C1 is carried out regularly on the basis of parameters chosen by the manufacturer. According to the invention this regeneration cycle C1 is preferably repeated each time a certain quantity of water has flowed through the first treatment unit 2 or possibly through the feed line 5.

As illustrated schematically in figure 1 in order to carry out the above-mentioned regeneration cycles C1-C2-C3, the treatment units 2-3-4 are provided with regulators 13-14-15 which are driven hydraulically by counters 16-17-18, more specifically by volumeters which are positioned in the water flow.

The regulators 13-14-15 are equipped with control mechanisms 19-20-21 which can be brought out of an inactive state by activation, which subsequently pass through a cycle during which the corresponding regeneration cycle is carried out and which at the end of such a regeneration cycle return to an inactive state.

The control mechanism 19 of the first treatment unit 2 is preferably activated by an activation mechanism 22 coupled to a counter or meter 16 which is coupled to the meter 16 in such a way that whenever a certain quantity of water has flowed through treatment unit 2 a start command is given to the control mechanism 19.

The control mechanisms 20 and 21 are activated by hydraulic pressure signals 23-24 which are delivered by the control mechanisms 19-20 at the end of the regeneration cycle C1, respectively C2. For this purpose the control mechanisms 20-21 are provided with activation mechanisms 25-26 which react to said pressure signals 23-24 and which put the control mechanisms 20-21 into operation.

The operation of the water softening device 1 is as follows. When the three treatment units 2-3-4 are in service the water is distributed from the feed 5 over the three treatment units 2-3-4. By contact with treatment medium, 10-11-12 respectively, the water is softened and can be sent to the user via the common outlet 6.

After a certain quantity of water has flowed through the counter 16, the above mentioned activation mechanism 22 assures that the control mechanism 19 comes into action and the first regeneration cycle C1 is carried out.

At the end of the regeneration cycle C1 the control mechanism 19 emits a pressure signal 23, by which the activation mechanism 25 is powered and the control mechanism 20 is put into operation so that the regeneration cycle C2 is started. At that moment the treatment unit 2 returns into service as indicated in the curve of figure 2.

After this the same situation is repeated for treatment unit 4 whose regeneration cycle C3 is started automatically as soon as the regeneration cycle C2 comes to an end. After the end of the regeneration cycle C3 the treatment unit 4 also comes back into service so that the initial state is achieved again.

The counter 16 assures that the regeneration cycle C1 is started again after some time, either after a well defined time interval, but preferably after a well defined quantity of water has flowed through the water softening device 1.

In figure 3 a practical embodiment of the water softening device of figure 1 is shown.

Each treatment unit, 2-3-4 respectively, consists in this case of a conduit circuit 27 with an inlet 28 for the water to be softened, an outlet 29, a quantity of treatment medium, 10-11-12 respectively, which is held in a treatment tank 30, a first valve 31 between the inlet 28 and the inlet 32 of the treatment tank 30, a second valve 33 between the inlet 32 of the treatment tank 30 and a discharge 34 to sewer, whereby in the conduit part to this discharge 34 a flow rate regulator 35 may be present, a third valve 36 which is positioned between the outlet 37 of the treatment tank 30 and the above mentioned outlet 6, and a circuit 38 positioned parallel over the third valve 36 for supplying regeneration medium 39, preferably brine, where, preferably, a fourth valve 40 is present in said circuit 38.

It should be noted that the flow rate regulators 35 may also be positioned elsewhere, e.g. on the conduits to the respective counters 16-17-18, in which case it is necessary that the flow rate limitation occurs only during the regeneration period and is stopped during service by a check-valve installed parallel over each flow rate regulator 25 in question.

The above mentioned counters 16-17-18 are installed in a conduit part of the conduit circuit in such a way that water runs through said counters 16-17-18 during the operation of the device, as well as during the regeneration.

The regeneration means 7-8-9 consist of brine devices which are connected via the third valve 36.

The control mechanisms 19-20-21 consist of mechanisms which can be put into an inactive state and by activating them can be switched on during a cycle.

All control mechanisms 19-20-21 may show an identical structure with the only difference that the first control mechanism 19 can be activated by the above mentioned activation mechanism 22, while the remaining control mechanisms 20-21 can be activated by pressure signals 23-24. Preferably all treatment units 2-3-4 are designed uniformly and show each an activation mechanism 22 as well as an activation mechanism 25-26, but depending on the set up, either the activation mechanism 22 or the activation mechanism 25-26 is made operational.

In certain applications the first control mechanism 19 will also be activated via an activation mechanism similar to the activation mechanisms 25-26, permitting the first cycle C1 to be started by means of a pressure signal, e.g., by means of a signal given by an operator. The regeneration cycles can also be started by manually turning the control disk 42.

As shown schematically in figure 4 the treatment unit 2 is installed in a housing 41, whose lower part consists of the treatment tank 30 and whose upper part is formed by the regulator 13. A similar structure pertains to the treatment units 3 and 4.

As shown in figure 5 the control mechanisms 19-20-21 preferably make use of a control disk 42 driven by the corresponding counter, 16-17-18 respectively. The drive of the control disk 42 takes place by means of a ratchet drive mechanism 43 that is formed by a pawl 45 positioned eccentrically on a shaft 44 which cooperates with denticulation 46 on the circumference of the control disk 42. The axle 44 in this case is coupled with the axle of the corresponding counter 16-17-18 via a transmission, which is not shown. The pawl 45 is pressed against the denticulation 46 by an elastic part 47 which is held under tension against a fixed guide 48.

This control disk 42 is provided with means which permit it to occupy a rest position which, in the embodiment shown, is formed by untoothed parts 49.

It is clear that according to a variant the ratchet drive mechanism may also cooperate with a ratchet wheel which is coupled via a transmission or an axle to the actual control disk 42.

The control by the control disk 42 takes place preferably completely hydraulically with the aid of servo valves which control the valves 31-33-36-40. As shown in figures 3, 5 and 7, preferably use is made of only two servo valves 50 and 51 which substantially consist of openings 52 and 53 which by means of the rotation of the control disk 42 as a function of its position, are closed or are respectively released and put in an open connection with a chamber 54 in which water is held under supply pressure.

As shown in figure 7 for these servo valves 50-51 use is made of valve seals 55-56 which are formed of an elastic material which by means of its elastic tension assures a sealing against the bottom side of the control disk 42. More specifically these valve seals consist of O rings 57-58 which are installed in seats 59-60 around the opening 52-53.

As shown in figures 6 and 7, the closing surface 61 of the control disk 42 in the places where a seal must be realized are provided with thickenings 62-63. In places where no seal has to be realized, grooves 64-65 are provided which permit the pressure to propagate easily from chamber 54 to the openings 52-53.

The valves 31 and 33 as shown in figure 8 preferably consist of a spring-loaded membrane valves which are controlled via the first servovalve 50. The third valve 36 is a spring loaded membrane valve which can be operated via the second servo valve 51 and the fourth valve 40 consists of a membrane valve which is controlled by the pressure drop over the third valve 36 or, in an alternative version by a pressure drop over another element such as the flow rate regulator 35.

In a non-represented variant, the fourth valve 40 shall be controlled by means of the first servo valve 50.

The activation mechanism 22 consists preferably of a disk 66 which is driven by the counter 16. This disk 66 which is illustrated only schematically in figure 4 is provided with a catching element 67 which assures that the control disk 42 is taken along at least over a small distance each time the disk 66 has carried out a certain displacement. After this this disk 66 can be brought back to the starting position by means of a reset mechanism.

The activation mechanisms 25-26 preferably consist of an element which can be driven back and forth by a drive element and which can push the corresponding control disk 42 out of the rest position. The mechanisms 25-26 are identical.

In the example of figures 5 and 9 to 11 this displaceable element is formed by a ratchet 68 which also acts as a back rotation limit for the control disk 42.

As shown in the figures, the drive element preferably consists of an element which can be moved between two positions, more specifically a moveable plunger 69, with essentially four active pressure surfaces, to wit a first pressure surface 70 on which the supply pressure prevailing in the chamber 54 acts, a second pressure surface 71 which is larger than the first and on which also the supply pressure acts but in opposite direction to the pressure on the first pressure surface 70, a third pressure surface 72 on which the atmospheric pressure exerts a force which is opposite to the force which is exerted by the supply pressure on the first pressure surface 70, and a fourth pressure surface 73 on which a control pressure can be applied via an inlet 74 which acts oppositely to the supply pressure exerted on the second pressure surface 71 in such a way that a pulselike control signal 23-24 results in a forward motion on the ascending flank 75 and a backward motion on the descending flank 76 of the pulse in question.

It is clear that instead of a plunger use may also be made of one or more membranes having pressure surfaces which fulfill identical functions.

Preferably the signal that is delivered by the first servo valve 50 of each treatment unit, respectively 2 and 3, with the exception of the last treatment unit 4, is utilized to activate the control mechanisms 20-21 of the next following treatment unit, 3-4 respectively. This means that the outlet 77 of the regulator 13 of the first treatment unit 2 is connected to the inlet 74 of the activation mechanism 25 present in the treatment unit 3, and the outlet 77 of the regulator 14 is connected to the inlet 74 of the activation mechanism 26.

The operation of the water softening device and the process employed hereby are as follows.

Initially all control disks 42 are in the rest position.

The disk 66 rotates as water is consumed. After consumption of a certain volume of water the control disk 42 of the regulator 13 is carried along by the cam element 67. It is clear that the disk 67 is driven in such a manner that the control disk 42 is taken along only after that such a large quantity of water has flowed through the device that a regeneration is necessary.

Because of its rotation the control disk 42 comes to sit with its denticulation in front of the constantly moving pawl 45 with the result that it is driven from that time on directly by the counter 16.

At this time the control disk 42 of the regulator 13 moves with the thickenings 62-63 along the servo valves 50-51 so that the treatment unit 2 goes into regeneration.

At this point it should be remarked that in the usage state the two servo valves 50-51 are closed and the control lines 78-79 shown in figure 8 are unpressurized. The valves 31-33-36-40 are then also in a state as shown in figure 8. The water passes through the conduit circuit according to the arrows A.

By providing the control disk 42 with thickenings 62-63 which display a shape as shown in figure 6, during the regeneration first the first valve 31 is closed and the second valve 33 is opened, while the valves 36 and 40 respectively remained opened and closed, which results in backflushing as is indicated by arrows B in figure 8.

In a following step the two servo valves 50-51 are opened with the result that the first valve 31 remains closed, the second valve 33 remains opened, the third valve 36 closes and the fourth valve 40 which reacts to the pressure drop over the third valve 36 opens. This results in a flow as indicated by arrows C in figure 8, at which time treatment medium 39 is carried along from the regeneration means 7 and is forced through the treatment tank 30. In this way the treatment medium 10 is regenerated.

In a following step a backflushing may still be provided as shown by the arrows B.

Finally the control disk 42 returns to a position where the two servo valves 50-51 are closed and the state of figure 8 occurs again in which case the treatment unit 2 comes back into its normal operation.

The control disk 42 returns to a rest position at the moment when an untoothed part 49 comes back in front of the pawl 45.

According to the invention, the pressure signal 23 present on the servovalve 50 is used to start regeneration on the following treatment unit 3. This pressure signal 23 is manifested as shown by the curve S1 in figure 1.

Due to the fact that this pressure signal 23 is applied to the activation mechanism 25, specifically the fact that pressure is exerted on the fourth pressure surface 73, the subsequent situations described below take place.

As long as the servo valve 50 is closed the plunger 69 is in the state shown in figures 5 and 9.

As soon as the opening 52 of the first servo valve 50 of the regulator 13 is pressurized, the plunger 69 moves under the influence of said pressure into the position illustrated in figure 10.

If at the end of the regeneration cycle C1 the pressure signal 23 also drops off, the plunger 69 moves back to the position illustrated in figure 11, this because of the fact that the supply pressure of the water prevails in the chamber 54 which exerts a greater force on the second pressure surface 71 than on the first pressure surface 70.

During this backward motion the control disk 42 of the regulator 14 is rotated by the pawl 68 over a small distance with the result that the pawl 45 of the regulator 14 engages the denticulation 46 of said control disk 42. The control disk 42 of the regulator 14 then initiates a regeneration cycle similar to that by the control disk 42 of the regulator 13.

At the end of the regeneration cycle C2 in the same manner the regeneration cycle C3 is started by the pressure signal 24.

After termination of the regeneration of the last treatment unit 4 no signal is sent to the first treatment unit. The regeneration of the first treatment unit resumes automatically when a well defined quantity of water has flowed through the treatment unit 2, after which the control disk 42 then is restarted by the above mentioned cam element 67.

In a variant the last treatment unit 4 sends a signal to the first treatment unit 2 but not in the form of a regeneration command but rather in the form of permission for regeneration in order to prevent two treatment units from going into regeneration at the same time.

The treatment units 2-3-4 and the corresponding regulators 13-14-15 are preferably designed as modules so that the treatment capacity can be increased exclusively by connecting such modules to each other, the expansion permitting the installation of an even or an odd number of treatment units 2-3-4.

In the case that one treatment unit is used separately it may be provided with a fifth valve 80 as shown in figure 8 which assures a water supply during regeneration.

It is clear that according to the invention an especially efficient method is offered for controlling the regeneration of various treatment units in a fully hydraulic manner.

The invention is not limited in any way to the versions illustrated as examples in the drawings but rather such water treatment device may be made up in various ways without departing from the scope of the appended claims.

Thus, for instance, it is not excluded that the various valves 31-33-36-40 can be operated in a different way. According to one variant it is also not impossible to control the regeneration cycles C2 and C3 by another pressure signal, e.g., a pressure signal coming from the second servo valve 51 or from a third supplementary servo valve.

It is also clear that the various components can be realized in other forms of embodiment than described heretofore. So, for example, can the ratchet drive mechanisms be replaced by gearwheel drive mechanisms which, on one hand, are coupled to the counters 16-17-18 and, on the other hand, can be coupled and uncoupled to the activating mechanism 22 and to the control mechanism 19-20-21, whereby the function of the catching element 67 then is redundant.

In addition the water softener can also be realized with other numbers of treatment units 2-3-4. Each treatment unit, 2-3-4 respectively, may also consist of two or more parallel-connected partial units in which case each partial unit contains a treatment tank 30.

Between the various cycles C1-C2-C3 certain time delays may be provided.

The regeneration means 7-8-9 may also consist of one common device, either with or without a common dosing system. In the example of the figures this means that one common brine device is used.

Although in the detailed description the invention was described exclusively with reference to a water softening device it is clear that the process for controlling the regeneration may also be used in other water treatment devices in which a similar structure may be provided for this purpose.

## Claims

1. Process for controlling the regeneration of a water treatment device, more specifically a water treatment device (1), such as a water softener, consisting of two or more treatment units (2-3-4) and possibly regeneration means (7-8-9) to regenerate these treatment units (2-3-4), characterized in that after a regeneration cycle (C1) is performed on a first of these treatment units, automatically as a result of the execution of the regeneration cycle (C1) on said first treatment unit (2), successively the regeneration cycles (C2-C3) of the other treatment units (3-4) are performed, whereby each time after the completion of each regeneration cycle (C1-C2-C3) the treatment unit (2-3-4) involved is put back into service and the next is started by means of a hydraulic signal.

2. Process according to claim 1, characterized in that the regeneration cycle (C1) of the above mentioned first treatment unit (2) is started whenever a certain quantity of water has flowed through said treatment unit (2).

3. Process according to claim 1 or 2, characterized in that the stop signal of the regeneration cycle (C1-C2) on a treatment unit (2-3) is used as a starting signal for the next treatment unit (3-4).

4. Process according to any of the foregoing claims, characterized in that at the end of the regeneration cycle (C3) of the last treatment unit (4) a signal is sent to the first treatment unit (2) which gives permission for regeneration.

5. Water treatment device using the process of one of the foregoing claims, consisting of two or more treatment units (2-3-4) and possibly regeneration means (7-8-9) in order to regenerate the treatment medium (10-11-12) present in the treatment units (2-3-4), characterized in that the treatment units (2-3-4) are provided with regulators (13-14-15) with which a regeneration cycle can be commanded and that these regulators (13-14-15) make use of control mechanisms (19-20-21) which can be brought out of an inactive state by activation, which subsequently pass through a cycle and return to the inactive state at the end of said cycle.

6. Water treatment device according to claim 5, characterized in that the control mechanisms (19-20-21) are driven by ratchet drive mechanisms (43) or gearwheel drive mechanisms which are driven by counters (16-17-18) which are driven by the flowing water, where the inactive states are obtained by means of means assuring that the pawls (45) of said ratchet drive mechanisms (43) do not have an engaging effect, respectively assuring that the engagement of the gearwheel drive mechanisms is prevented.

7. Water treatment device according to claim 5 or 6, characterized in that the regulator (13) of the first treatment unit (2) is provided with an activation mechanism (22) which is driven by a counter (16) positioned in the water flow, said activation mechanism (22) being provided with a catching element (67) which activates the control mechanism (19) of the first treatment unit (2) after a certain quantity of water has flowed through said treatment unit (2).

8. Water treatment device according to claim 5, 6 or 7, characterized in that the regulator (14-15) of each treatment unit (2-4) after the first treatment unit (2) is provided with a reciprocating element, which can be driven by a pressure signal, with which the corresponding control mechanism (20-21) can be brought into an active state.

9. Water treatment device according to claim 8, characterized in that said control mechanisms (20-21) are provided with activation mechanisms (25-26) in order to move the reciprocating elements mentioned above, each of which consists of an element capable of moving between two positions, such as a plunger (69), having substantially four active pressure surfaces, to wit, a first pressure surface (70) on which a supply pressure is active, a second pressure surface (71) which is larger than the first, and on which also the supply pressure acts but in opposite direction to the pressure on the first pressure surface (70), a third pressure surface (72) on which the atmospheric pressure acts in the opposite direction to the force exerted by the supply pressure on the first pressure surface (70), and a fourth pressure surface (73) on which a control pressure can be applied which acts in the opposite direction to the supply pressure exerted on the second pressure surface (71) in such a way that a pulsed pressure signal (23) results in a forward motion on the ascending flank (75) and a backward motion on the descending flank (76).

10. Water treatment device according to any of claims 5 to 9, characterized in that the treatment units (2-3-4) make use of valves (31-33-36-40) which are controlled by servo valves (50-51) which in turn are controlled by the above mentioned control mechanisms (19-20-21) and that the pressure signal (23-24) for activating the regeneration cycles (C2-C3) of the treatment units (3-4) following the first treatment unit (2) is derived from a signal from one of the above mentioned servo valves (50-51) or a supplementary servo valve.

11. Water treatment device according to claim 10, characterized in that each treatment unit (2-3-4) consists essentially of a conduit circuit (27) with an inlet (28) for the water to be softened, an outlet (29), a quantity of treatment medium (10-11-12) which is held in a treatment tank (30), a first valve (31) between the inlet (28) of the conduit circuit (27) and the inlet (32) of the treatment tank (30), a second valve (33) between the inlet (32) of the treatment tank (30) and a discharge to the sewer (34), a third valve (36) positioned between the outlet (37) of the treatment tank (30) and the above mentioned discharge (6), and a circuit (38) positioned parallel over the third valve (36) for supplying regeneration medium (39), a fourth valve (40) preferably being present in said circuit (38).

12. Water treatment device according to any of claims 5 to 11, characterized in that the treatment units (2-3-4) are of modular design so that the treatment capacity can be increased exclusively by connecting modules to each other, where said expansion permits the installation of an even or odd number of treatment units (2-3-4).

13. Water treatment device according to any of claims 5 to 12, characterized in that the treatment units (2-3-4) consist of water softeners, with treatment medium formed by a cation exchange resin and that the regeneration means (7-8-9) consists of one or more brine devices.

## Patentansprüche

1. Verfahren zur Steuerung der Regenerierung eines Wasserbehandlungssystems, spezieller eines Wasserbehandlungssystems (1), wie etwa eines Wasserenthärters, bestehend aus zwei oder mehr Behandlungseinheiten (2-3-4) und eventuell Regenerationsmitteln (7-8-9) zum Regenerieren dieser Behandlungseinheiten (2-3-4), dadurch gekennzeichnet, dass, nachdem ein Regenerationszyklus (C1) an einer ersten dieser Behandlungseinheiten durchgeführt wurde, automatisch als Ergebnis der Durchführung des Regenerationszyklus (C1) an besagter erster Behandlungseinheit (2) aufeinanderfolgend die Regenerationszyklen (C2-C3) der anderen Behandlungseinheiten (3-4) durchgeführt werden, wobei jedes Mal nach Beendigung jedes Regenerationszyklus (C1-C2-C3) die betroffene Behandlungseinheit (2-3-4) wieder in Betrieb genommen wird und der nächste mittels eines hydraulischen Signals gestartet wird.

2. Prozess gemäß Anspruch 1, dadurch gekennzeichnet, dass der Regenerationszyklus (C1) der oben erwähnten ersten Behandlungseinheit (2) immer dann gestartet wird, wenn eine bestimmte Wassermenge duch besagte Behandlungseinheit (2) geflossen ist.

3. Prozess gemäß Anspruch 1 oder 2, dadurch gekennzeichnet, dass das Stopsignal des Regenerationszyklus (C1-C2) an einer Behandlungseinheit (2-3) als Startsignal für die nächste Behandlungseinheit (3-4) benutzt wird.

4. Prozess gemäß einem der vorgenannten Ansprüche, dadurch gekennzeichnet, dass am Ende des Regenerationszyklus (C3) der letzten Behandlungseinheit (4) ein Signal zur ersten Behandlungseinheit (2) gesendet wird, das Erlaubnis zur Regeneration gibt.

5. Wasserbehandlungssystem, das den Prozess eines der vorangehenden Ansprüche nutzt, bestehend aus zwei oder mehr Behandlungseinheiten (2-3-4) und eventuell Regenerationsmitteln (7-8-9), um das in den Behandlungseinheiten (2-3-4) vorhandene Behandlungsmedium (10-11-12) zu regenerieren, dadurch gekennzeichnet, dass die Behandlungseinheiten (2-3-4) mit Reglern (13-14-15) versehen sind, womit ein Regenerationszyklus befohlen werden kann, und dass diese Regler (13-14-15) Steuermechanismen (19-20-21) benutzen, die durch Aktivierung aus einem inaktiven Zustand gebracht werden können, anschließend einen Zyklus durchlaufen und am Ende besagten Zyklus zum inaktiven Zustand zurückkehren.

6. Wasserbehandlungssystem gemäß Anspruch 5, dadurch gekennzeichnet, dass die Steuermechanismen (19-20-21) von Sperrgetrieben (43) oder Zahnradgetrieben angetrieben werden, die von Zählern (16-17-18) angetrieben werden, die vom strömenden Wasser angetrieben werden, wobei die inaktiven Zustände mittels Mitteln erhalten werden, die sicherstellen, dass die Sperrklinken (45) der besagten Sperrgetriebe (43) keinen Eingreifeffekt haben, beziehungsweise sicherstellen, dass das Eingreifen der Zahnradgetriebe verhindert wird.

7. Wasserbehandlungssystem gemäß Anspruch 5 oder 6, dadurch gekennzeichnet, dass der Regler (13) der ersten Behandlungseinheit (2) mit einem Aktivierungsmechanismus (22) versehen ist, der von einem im Wasserstrom positionierten Zähler (16) angetrieben wird, wobei besagter Aktivierungsmechanismus (22) mit einem Mitnehmelement (67) versehen ist, das den Steuermechanismus (19) der ersten Behandlungseinheit (2) aktiviert, nachdem eine bestimmte Wassermenge durch besagte Behandlungseinheit (2) geflossen ist.

8. Wasserbehandlungssystem gemäß Anspruch 5, 6 oder 7, dadurch gekennzeichnet, dass der Regler (14-15) jeder Behandlungseinheit (2-4) nach der ersten Behandlungseinheit (2) mit einem Umkehrelement versehen ist, das mittels eines Drucksignals angetrieben werden kann, womit der entsprechende Steuermechanismus (20-21) in einen aktiven Zustand gebracht werden kann.

9. Wasserbehandlungssystem gemäß Anspruch 8, dadurch gekennzeichnet, dass besagte Steuermechanismen (20-21) mit Aktivierungsmechanismen (25-26) versehen sind, um die oben erwähnten Umkehrelemente zu bewegen, wovon jedes aus einem Element besteht, das zur Bewegung zwischen zwei Positionen in der Lage ist, wie etwa ein Plunger (69), der hauptsächlich vier aktive Druckflächen hat, nämlich eine erste Druckfläche (70), woran ein Zufuhrdruck aktiv ist, eine zweite Druckfläche (71), die größer als die erste ist und worauf ebenfalls der Zufuhrdruck einwirkt, jedoch in entgegengesetzter Richtung zu dem Druck an der ersten Druckfläche (70), eine dritte Druckfläche (72), woran der atmosphärische Druck in entgegengesetzter Richtung zu der vom Zufuhrdruck an der ersten Druckfläche (70) ausgeübte Druck wirkt, und eine vierte Druckfläche (73), woran ein Kontrolldruck ausgeübt werden kann, der in der entgegengesetzten Richtung zu dem an der zweiten Druckfläche (71) ausgeübten Zufuhrdruck wirkt, derart, dass ein pulsförmiges Drucksignal (23) eine Vorwärtsbewegung an der ansteigenden Flanke (75) und eine Rückwärtsbewegung an der absteigenden Flanke (76) zur Folge hat.

10. Wasserbehandlungssystem gemäß einem der Ansprüche 5 bis 9, dadurch gekennzeichnet, dass die Behandlungseinheiten (2-3-4) Ventile (31-33-36-40) verwenden, die von Servoventilen (50-51) gesteuert werden, die ihrerseits von den oben erwähnten Steuermechanismen (19-20-21) gesteuert werden, und dass das Drucksignal (23-24) zur Aktivierung der Regenerationszyklen (C2-C3) der Behandlungseinheiten (3-4), die der ersten Behandlungseinheit (2) folgen, von einem Signal von einem der oben erwähnten Servoventile (50-51) oder einem zusätzlichen Servoventil abgeleitet wird.

11. Wasserbehandlungssystem gemäß Anspruch 10, dadurch gekennzeichnet, dass jede Behandlungseinheit (2-3-4) im wesentlichen aus einem Leitungskreislauf (27) mit einem Einlass (28) für das zu enthärtende Wasser besteht, einem Auslass (29), einer Quantität von Behandlungsmedium (10-11-12), das in einem Behandlungstank (30) gehalten wird, einem ersten Ventil (31) zwischen dem Einlass (28) des Leitungskreislaufs (27) und dem Einlass (32) des Behandlungstanks (30), einem zweiten Ventil (33) zwischen dem Einlass (32) des Behandlungstanks (30) und einem Abfluss zum Kanal (34), einem zwischen dem Auslass (37) des Behandlungstanks (30) und dem oben erwähnten Abfluss (6) positionierten dritten Ventil (36), und einem Kreislauf (38) zur Zufuhr von Regenerationsmedium (39), der parallel über dem dritten Ventil (36) positioniert ist, einem vierten Ventil (40), das sich vorzugsweise in besagtem Kreislauf (38) befindet.

12. Wasserbehandlungssystem gemäß einem der Ansprüche 5 bis 11, dadurch gekennzeichnet, dass die Behandlungseinheiten (2-3-4) ein Moduldesign haben, so dass die Behandlungskapazität nur durch miteinander Verbinden von Modulen erhöht werden kann, wobei besagte Expansion die Montage einer geraden oder ungeraden Zahl von Behandlungseinheiten (2-3-4) gestattet.

13. Wasserbehandlungssystem gemäß einem der Ansprüche 5 bis 12, dadurch gekennzeichnet, dass die Behandlungseinheiten (2-3-4) aus Wasserenthärtern bestehen, mit aus einem Kationenaustauschharz gebildeten Behandlungsmedium, und dass die Regenerationsmittel (7-8-9) aus einer oder mehreren Salzlakevorrichtungen bestehen.

## Revendications

1. Procédé pour régler la régénération d'un dispositif de traitement de l'eau, plus spécifiquement un dispositif de traitement de l'eau (1) tel qu'un adoucisseur d'eau, constitué par deux unités de traitement (2-3-4) ou plus et, le cas échéant, par des moyens de régénération (7-8-9) dans le but de régénérer ces unités de traitement (2-3-4), caractérisé en ce qu'après avoir soumis à un cycle de régénération (C1) la première unité parmi ces unités de traitement, automatiquement suite à la mise en oeuvre du cycle de régénération (C1) dans ladite première unité de traitement (2), de manière successive les cycles de régénération (C2-C3) des autres unités de traitement (3-4) sont mis en oeuvre, par lequel, chaque fois après l'achèvement, de chaque cycle de régénération (C1-C2-C3), l'unité de traitement (2-3-4) impliquée est remise en service et la suivante est soumise à un démarrage à l'aide d'un signal hydraulique.

2. Procédé selon la revendication 1, caractérisé en ce que le cycle de régénération (C1) de la première unité de traitement (2) mentionnée ci-dessus est déclenché chaque fois qu'une certaine quantité d'eau s'est écoulée à travers ladite unité de traitement (2).

3. Procédé selon la revendication 1 ou 2, caractérisé en ce que le signal d'arrêt du cycle de régénération (C1-C2) dans une unité de traitement (2-3) est utilisé comme signal de démarrage pour l'unité de traitement suivante (3-4).

4. Procédé selon l'une quelconque des revendications précédentes, caractérisé en ce qu'au terme du cycle de régénération (C3) de la dernière unité de traitement (4), un signal est envoyé à la première unité de traitement (2) qui donne la permission de procéder à une régénération.

5. Dispositif de traitement de l'eau utilisant le procédé selon l'une quelconque des revendications ci-dessus, constitué par deux unités de traitement (2-3-4) ou plus et, le cas échéant, par des moyens de régénérations (7-8-9) dans le but de régénérer le milieu de traitement (10-11-12) présent dans les unités de traitement (2-3-4), caractérisé en ce que les unités de traitement (2-3-4) sont munies de régulateurs (13-14 -15) avec lesquels un cycle de régénération peut être commandé et en ce que ces régulateurs (13-14-15) font usage de mécanismes de commande (19-20-21) qui peuvent quitter leur état inactif par activation, qui passent ensuite par un cycle et qui retournent à l'état inactif au terme dudit cycle.

6. Dispositif de traitement de l'eau selon la revendication 5, caractérisé en ce que les mécanismes de commande (19-20-21) sont entraînés par des mécanismes d'entraînement par encliquetage (43) ou par des mécanismes d'entraînement à roues d'engrenage qui sont entraînés par des compteurs (16-17-18) qui sont entraînés par l'eau qui s'écoule, les états inactifs étant obtenus à l'aide de moyens garantissant le fait que les griffes (45) desdits mécanismes d'entraînement par encliquetage (43) n'ont pas un effet d'engrènement, respectivement garantissant le fait que l'on empêche l'engrènement des mécanismes d'entraînement à roues d'engrenage.

7. Dispositif de traitement de l'eau selon la revendication 5 ou 6, caractérisé en ce que le régulateur (13) de la première unité de traitement (2) est muni d'un mécanisme d'activation (22) qui est entraîné par un compteur (16) positionné dans l'écoulement de l'eau, ledit mécanisme d'activation (12) étant muni d'un élément de saisie (67) qui active le mécanisme de commande (19) de la première unité de traitement (2) après qu'une certaine quantité d'eau s'est écoulée à travers ladite unité de traitement (2).

8. Dispositif de traitement de l'eau selon la revendication 5, 6 ou 7, caractérisé en ce que le régulateur (14-15) de chaque unité de traitement (2-4) après la première unité de traitement (2) est muni d'un élément effectuant un mouvement de va-et-vient qui peut être entraîné par un signal de pression avec lequel le mécanisme de commande correspondant (20-21) peut être amené à l'état actif.

9. Dispositif de traitement de l'eau selon la revendication 8, caractérisé en ce que lesdits mécanismes de commande (20-21) sont munis de mécanismes d'activation (25-26) dans le but de déplacer les éléments mentionnés ci-dessus effectuant un mouvement de va-et-vient, chacun étant constitué d'un élément capable de se déplacer entre deux positions, tel qu'un piston plongeur (69) possédant essentiellement quatre surfaces de pression active, à savoir une première surface de pression (70) sur laquelle une pression d'alimentation est active, une deuxième surface de pression (71) qui est plus grande que la première et sur laquelle agit également la pression d'alimentation, mais dans la direction opposée à celle de la pression s'exerçant sur la première surface de pression (70), une troisième surface de pression (72) sur laquelle s'exerce la pression atmosphérique dans la direction opposée à celle de la force exercée par la pression d'alimentation sur la première surface de pression (70), et une quatrième surface de pression (73) sur laquelle une pression de commande peut s'exercer qui agit dans la direction opposée à celle de la pression d'alimentation s'exerçant sur la seconde surface de pression (71) de telle sorte qu'un signal de pression à impulsions (23) donne lieu à un mouvement vers l'avant sur le flanc ascendant (75) et à un mouvement vers l'arrière sur le flanc descendant (76).

10. Dispositif de traitement de l'eau selon une quelconque des revendications 5 à 9, caractérisé en ce que unités de traitement (2-3-4) font usage de soupapes (31 -33 -36-40) qui sont commandées par des servo-soupapes (50-51) qui sont à leur tour commandées par les mécanismes de commande mentionnés ci-dessus (19-20-21) et en ce que le signal de pression (23-24- pour activer les cycles de régénération (C2-C3) des unités de traitement (3-4), suite à la première unité de traitement (2) est, dérivé d'un signal provenant d'une des servo-soupapes (50-51) mentionnées ci-dessus ou d'une servo-soupape supplémentaire.

11. Dispositif de traitement de l'eau selon la revendication 10, caractérisé en ce que chaque unité de traitement (2-3-4) est constituée essentiellement d'un circuit de conduit (27) comprenant une entrée (28) pour l'eau à adoucir, une sortie (19), une quantité d'un milieu de traitement (10-11-12) qui est maintenu dans une cuve de traitement (30), une première soupape (31) entre l'entrée (28) du circuit de conduit (27) et l'entrée (32) de la cuve de traitement (30), une seconde soupape (33) entre l'entrée (32) de la cuve de traitement (30) et une évacuation vers les égouts (34), une troisième soupape (36) positionnée entre la sortie (37) de la cuve de traitement (30) et l'évacuation (6) mentionnée ci-dessus, et un circuit (38) positionné en parallèle par-dessus la troisième soupape (36) pour alimenter un milieu de régénération (39), une quatrième soupape (40) étant de préférence présente dans ledit circuit (38).

12. Dispositif de traitement de l'eau selon l'une quelconque des revendications 5 à 11, caractérisé en ce que les unités de traitement (2-3-4) sont de conception modulaire, si bien que la capacité de traitement peut être augmentée exclusivement en reliant des modules les uns aux autres, ladite expansion permettant le montage d'un nombre pair ou impair d'unités de traitement (2-3-4).

13. Dispositif de traitement de l'eau selon l'une quelconque des revendications 5 à 12, caractérisé en ce que les unités de traitement (2-3-4) sont constituées par des adoucisseurs d'eau comprenant un milieu de traitement formé par une résine échangeuse de cations et en ce que les moyens de régénération (7-8-9) sont constitués par un ou plusieurs dispositifs contenant de la saumure.
